**Europäisches Patentamt**

**European Patent Office**

**Office européen des brevets**

(19)

(11) Veröffentlichungsnummer: **0 017 649**

**A1**

(12) # EUROPÄISCHE PATENTANMELDUNG

(21) Anmeldenummer: **80890039.3**

(22) Anmeldetag: **28.03.80**

(51) Int. Cl.³: **B 01 D 17/02**
**//B04C5/103**

(30) Priorität: **30.03.79 AT 2408 79**

(43) Veröffentlichungstag der Anmeldung:
**15.10.80 Patentblatt 80/21**

(84) Benannte Vertragsstaaten:
**BE CH DE FR GB IT LU NL SE**

(71) Anmelder: **Bokan, Sigisbert**
**Plüddemanngasse 34 A**
**A-8010 Graz(AT)**

(72) Erfinder: **Bokan, Sigisbert**
**Plüddemanngasse 34 A**
**A-8010 Graz(AT)**

(54) **Abscheider für flüssige Gemenge aus Anteilen verschiedenen spezifischen Gewichts.**

(57) Dieser Abscheider besteht aus einem rohrförmigen Mantel (16), an dessen unteren Ende ein Sammelraum (17) für feste Verunreinigungen vorgesehen ist, mit einem Zuflußrohr für die zu reinigende Flüssigkeit (9) und einem Abflußrohr für die gereinigte Flüssigkeit (10).

In diesem Abscheider ist ein rohrförmiger, vorzugsweise entfernbarer Einsatz (13) mit außen angebrachten Leitlamellen (14) angeordnet, welcher sich vom Sammelraum nach oben erstreckt, den Abscheideraum in einen äußeren Abscheideraum und einen innerhalb des Einsatzes gelegenen inneren Abscheideraum trennt und Öffnungen (15) für den Durchtritt der leichteren Flüssigkeitsanteile aufweist.

Der Zufluß mündet über eine Absturzpfeife (PF) horizontal und tangential in den äußeren Abscheideraum, der Abfluß ist oberhalb des Sammelraumes angeordnet.

Der Einsatz weist an seinem oberen Ende einen Speicherboden (7) auf, der den äußeren Abscheideraum vom Speicherraum trennt.

Am oberen Ende dieses Einsatzes ist ein Hebebügel (8) mit einer Signalplatte (6) angebracht.

Ein von einem Einbaukranz (2) gehaltener Aufsatzring (1) ist entlang der Mantelinnenseite verschiebbar angeordnet und gegenüber Letzterer durch eine Rollringdichtung (3) abgedichtet.

./...

Fig.1

ABSCHEIDER FÜR FLÜSSIGE GEMENGE AUS ANTEILEN VER-

SCHIEDENEN SPEZIFISCHEN GEWICHTS
=====================================================

Die Wirkungsweise des Abscheiders beruht auf dem Verhalten von Flüssigkeits oder Flüssigkeits- Feststoffgemengen verschiedenen spezifischen Gewichtes, unter dem Einfluß der Bewegung (Strömung). Während in herkömmlichen Abscheidern die Bewegung (Strömung) durch Erzeugung von Turbulenz den Abscheidevorgang behindert, werden im gegenständlichen Abscheider diese Bewegungen gelenkt und zur Abscheidung ausgenützt.

Das Flüssigkeitsgemenge tritt über eine Absturzpfeife (PF) und einen anschließenden Bogen horizontal, tangential, in den äußeren Abscheideraum ein und bringt dadurch die im Behälter vorhandene Flüssigkeit in eine drehende Bewegung um die vertikale Achse des Abscheiders. Dadurch werden die schwereren Anteile (Wirkung einer Zentrifuge) nach außen gedrückt, so sie von Leitwülsten (12), welche wie schiefe Ebenen wirken, nach unten gerichtet werden, während die leichteren Anteile von am Innenmantel (13 Einsatzkörper) angebrachten Leitwülsten (Lamellen 14), welche wie schiefe Ebenen nach oben gerichtet sind, über anschließende Öffnungen (15) in den inneren Abscheideraum (I) nach oben geführt werden. Die äußeren Leitwülste können entfallen, sofern der Unterschied des spezifischen Gewichtes zwischen den abzuscheidenden Flüssigkeiten mehr als 0,03 kg/dm$^3$ beträgt. Es können sowohl leichtere als auch schwerere Anteile (bezogen auf spezifisches Gewicht 1 kg/dm$^3$) damit abgeschieden werden. Ein Speicherboden (7) trennt den Speicherraum vom äußeren Abscheideraum (Ä).

Der Hebebügel (8) für den Innenmantel (13) ist so gekröpft, daß bei Inbetriebnahme die untere Kröpfung gerade mit dem Flüssigkeitsspiegel (Abflußhöhe 4) abschließt, während mittels einer in den Oberteil des Hebebügels eingefügte Verstellschraube (S) eine Anzeigeplatte (6), so eingestellt werden kann, daß sie bei dem entsprechenden spezifischen Gewicht (z. B. 0,85) der abzuscheidenden Flüssigkeit genau gleich dem Flüssigkeitsspiege (5) steht und dadurch die Erreichung der max. Speicherfähigkeit des Abscheiders signalisiert. Dadurch ist es auch dem Laie möglich, die zeitgerechte Wartung der Anlage zu veranlassen und Schäden durch Überfüllung zu vermeiden.

Die Leistung des Abscheiders wächst in einem begrenzten Bereich der Zuflußmenge mit der Verstärkung des Zuflusses mit, da durch erhöhten Zufluß das Flüssigkeitsgemenge im äußeren Abscheiderau schneller bewegt wird und sich dadurch die Zentrifugenwirkung erhöht. Der Abscheider wird dadurch leistungselastisch. Der Schlammabscheider am Fuß dieses Abscheiders gibt die Gewähr, da der unten liegende Abfluß durch abgelagerte Schlämme nicht vorzeitig verschlossen wird. Er kann je nach Schlammgehalt verach:

den groß (tief 17) dimensioniert werden. Bei den derzeit in Betrieb stehenden Anlagen wird der unten liegende Abfluß oft schon vor Erreichen der max. Speicherfähigkeit durch abgesetzte Schlämme verlegt.

**Material:**

Der Abscheider    kann aus allen Materialien erzeugt werden, welche eine Beständigkeit, Dichtheit und Festigkeit gegenüber allen Komponenten des abzuscheidenden Flüssigkeitsgemenges sowie den eventuell außen vorkommenden Flüssigkeiten (Grundwasser) aufweisen.

**Lagerung:** (unterirdisch verlegt)

Um den Abscheider gegenüber Bewegungen an der Erdoberfläche unempfindlich zu machen, ist der oberste Aufsatzring (1) als Gleitring mit Rolldichtung (3) konstruiert, der in einem begrenzten Bereich (10 cm) Bewegungen der Oberfläche (Fahrbahn) mitmacht und den Abscheider nicht nach unten drückt oder nach oben zieht. Dadurch bleibt der Aufsatz dicht und verhindert beim eventuellen Aufstauen der abfließenden Flüssigkeit ein Ausfließen der leichteren Anteile (herkömmlich - starre Verbindungen).

Außerdem bleibt der Abscheider in der gewählten Lage und wird dadurch die zu- und Abflußhöhe nicht verändert.

Bei der transportablen Ausführung (Deckel frei) wird dieser Gleitaufsatz weggelassen.

Am unteren Ende des Abscheiders umläuft ein Einbauwulst (20) die Außenseite, um durch das Gewicht des umgebenden Erdreichs die Anlage bei Entleerung vor Auftrieb zu schützen.

Das Steigrohr (Abflußrohr 10) ist außen angeordnet wodurch die Richtung der Abflußleitung in einem Bereich von ca. 230° durch einfache Drehung des Abflußbogens (AB) am oberen Ende der Steig-

0017649

leitung wählbar ist.

## Fall I

Leichtere Anteile sollen ausgeschieden und entfernt werden:

Die leichteren Anteile schweben im ruhigen inneren Abscheideraum (I) nach oben und können von dort ausgepumpt werden, während
die schwereren Anteile nach Absetzen von Schlamm über eine runde
Öffnung im unteren Drittel des Abscheiders abfließen, in einem
Rohr (10) an der Außenseite hochsteigen und im freien Gefälle
über die Abflußleitung abfließen.

## Fall II

Schwerere Flüssigkeiten sollen entfernt werden:

Der Abscheidevorgang bleibt gleich, jedoch werden die leichteren
Anteile über eine runde Öffnung (II) im obersten Bereich des Abscheiders im freien Gefälle in das Abflußrohr abgeleitet. Der
untere Abfluß fällt in diesem Fall weg.

## Verbesserungen gegenüber den bisher üblichen Abscheidern

a) Erhöhte Abscheideleistung bei geringerem Platzbedarf

b) Leichterer Einbau

c) Schutz der abgeschiedenen Flüssigkeit vor Turbulenz im Abscheidebereich

d) Ausnutzung der potentiellen Energie des Flüssigkeitsgemenges für die Abscheidung (Zentrifuge) (22)

e) Anzeige für Erreichung der max. Speicherfähigkeit (6)

f) Zusätzlicher Schlammfang

g) Auftriebssicherung (20, 21)

h) Beweglicher Gleitring mit Rolldichtung (1,3)

i) Durch gerichtete Strömung wird die Abscheideleistung günstig beeinflußt

P a t e n t a n s p r ü c h e :

1. Rohrförmiger Abscheider für flüssige und feste Verunreinigungen aus einer
Flüssigkeit mit einem innerhalb eines rohrförmigen Mantels angeordneten Abscheideraum, an dessen unterem Ende ein Sammelraum für feste Verunreinigungen
vorgesehen ist, mit einem Zuflußrohr für die zu reinigende Flüssigkeit und einem
Abflußrohr für die gereinigte Flüssigkeit, dadurch gekennzeichnet, daß im Abscheideraum ein rohrförmiger vorzugsweise entfernbarer Einsatz (13) angeordnet
ist, welcher sich vom Sammelraum (17) nach oben erstreckt und den Abscheideraum
in einen äußeren Abscheideraum (Ä) und einen innerhalb des Einsatzes (13) gelegenen inneren Abscheideraum (I) trennt, daß der Einsatz (13) Öffnungen (15) für
den Durchtritt der leichteren Flüssigkeitsanteile in den inneren Abscheideraum
(I) aufweist, daß das Zuflußrohr (9), zur Erzeugung eines Strömungswirbels vom
Zuflußniveau über eine Absturzpfeife (PF) im äußeren Abscheideraum (Ä), neben
dem Einsatz (13), horizontal und im wesentlichen tangential mündet, und die
Mündung des Abflußrohres (10) in den Mantel oberhalb des Sammelraumes (17) und
unterhalb des Zuflußniveaus im äußeren Abscheideraum (Ä) angeordnet ist, daß das
Abflußniveau unterhalb des Zuflußniveaus liegt, wobei vorzugsweise die Mündung
des Abflußrohres (10) in den Mantel entweder auf Höhe des Abflußniveaus oder
unterhalb desselben liegt, und daß gegebenenfalls auf der Innenseite des Mantels
(16) Leitwülste (12) vorgesehen sind.

2. Abscheider nach Patentanspruch 1, dadurch gekennzeichnet, daß sich der Einsatz (13) nur über einen Teil der Höhe des Mantels (16) erstreckt und oberhalb
der Mündung des Zuflußrohres (9) und unterhalb des Zuflußniveaus endet, wobei
oberhalb des oberen Endes des Einsatzes (13) ein Speicherraum für die leichteren
Flüssigkeitsanteile ausgebildet ist.

3. Abscheider nach Patentanspruch 2, dadurch gekennzeichnet, daß der Einsatz (13)
an seinem oberen Ende einen Speicherboden (7) aufweist, der den Speicherraum vom
äußeren Abscheideraum (Ä) trennt.

4. Abscheider nach einem der Patentansprüche 1 bis 3, dadurch gekennzeichnet, daß
der Einsatz (13) in den äußeren Abscheideraum (Ä) ragende Leitwülste (14) oder
dgl. aufweist, welche im Drehsinn des Strömungswirbels ansteigend angeordnet sind.

5. Abscheider nach Patentanspruch 4, dadurch gekennzeichnet, daß die Leitwülste
(14) des Einsatzes (13) als entlang einer Schraubenlinie angeordnete Lamellen
ausgebildet sind, an deren Unterseiten die Öffnungen (15) im Einsatz (13) anschließen.

6. Abscheider nach einem der Patentansprüche 1 bis 5, dadurch gekennzeichnet, daß
der Einsatz (13) an seinem oberen Ende einen Hebebügel (8) aufweist, dessen oberes
Ende auf Abflußniveau angeordnet ist und der eine auf dem maximalen Füllniveau des

0017649

Speicherraumes angeordnete Anzeigenplatte (6) trägt, welche mittels einer Stellschraube (S) gegenüber dem Hebebügel (8) entsprechend dem spezifischen Gewicht der in den Speicherraum abzuscheidenden Flüssigkeit der Höhe nach verstellbar ist.

7. Abscheider nach einem der vorhergehenden Patentansprüche, dadurch gekennzeichnet, daß das Zuflußrohr (9) den Mantel (16) oberhalb des maximalen Füllniveaus des Speicherraumes durchdringt und die Absturzpfeife (PF) innerhalb des Mantels (16) angeordnet ist.

8. Abscheider nach einem der vorhergehenden Ansprüche, dadurch gekennzeichnet, daß zum Abscheiden von leichteren flüssigen Verunreinigungen die Mündung des Abflußrohres (10) nahe dem unteren Ende des Mantels (16) angeordnet ist, das Abflußrohr (10) bis zum Abflußniveau ansteigt und ein um eine vertikale Achse drehbares Bogenstück (AB) aufweist, welches einen auf Abflußniveau liegenden horizontalen Schenkel aufweist.

9. Abscheider nach einem der Patentansprüche 1 bis 7, dadurch gekennzeichnet, daß zum Abscheiden von schweren flüssigen Verunreinigungen die Mündung des Abflußrohres (10) auf Abflußniveau angeordnet ist.

10. Abscheider nach einem der Patentansprüche 1 bis 9, dadurch gekennzeichnet, daß zum unterirdischen Einbau am unteren Ende des Mantels (16) ein an dessen Außenseite umlaufender Einbauwulst (20) angeordnet ist.

11. Abscheider nach einem der Patentansprüche 1 bis 10, dadurch gekennzeichnet, daß bei unterirdischem Einbau am oberen Ende des Mantels (16) ein von einem Einbaukranz gehaltener Aufsatzring (1) vorgesehen ist, der entlang der Mantelinnenseite verschiebbar angeordnet und gegenüber letzterer durch eine Rollringdichtung abgedichtet ist und einen Deckel trägt.

12. Abscheider nach einem der Ansprüche 1-11, dadurch gekennzeichnet, daß die potentielle Energie, welche durch den Höhenunterschied zwischen Zu- und Abfluß (22) vorhanden und durch Veränderung dieses Höhenunterschiedes variierbar ist, für den Abscheidevorgang ausgenützt wird, in dem mit ihrer Hilfe die zu reinigende Flüssigkeit durch tangentiale Einmündung des Zuflusses in eine durch die Form des Abscheiders bestimmte drehende Bewegung versetzt wird.


Wien, am 1. Feb. 1980

Fig.1

Fig. 2

**Europäisches Patentamt**

# EUROPÄISCHER RECHERCHENBERICHT

Nummer der Anmeldung

EP 80 89 0039.3

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - C - 646 696 (SCHILDE) <br> * Fig. 1, 2, Position e * <br> -- | 1,4, <br> 5,12 |
| | FR - A1 - 2 281 170 (P. SAGET) <br> * Fig. 2, 4, 6 * <br> -- | 1,4, <br> 5,7,8 |
| | US - A - 1 682 757 (R.C. HOPKINS) <br> * Fig. 1, 3, Position 13 * <br> -- | 1,2, <br> 5,12 |
| A | DE - A1 - 2 736 691 (HAJTOMÜVEK ES FESTÖBERENDEZLSEK) <br> * vollständiges Dokument * <br> --- | |
| A | US - A - 3 489 680 (SNAVELY, JR.) <br> * vollständiges Dokument * <br> -- | |
| A | CHEMIE-ING.-TECHNIK; Band 41, Nr. 5 und 6, 1969 <br> Weinheim/Bergstraße <br> M. BOHNET "Trennen zweier Flüssigkeiten im Hydrozyklon" <br> Seiten 381 bis 387 <br> * vollständiges Dokument * <br> ---- | |

**KLASSIFIKATION DER ANMELDUNG (Int.Cl.3)**

B 01 D 17/02
//B 04 C 5/103

**RECHERCHIERTE SACHGEBIETE (Int. Cl.3)**

B 01 D 17/02
B 04 C 5/103
B 04 C 5/107
B 04 C 5/12
B 04 C 5/13
C 02 F 1/40

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

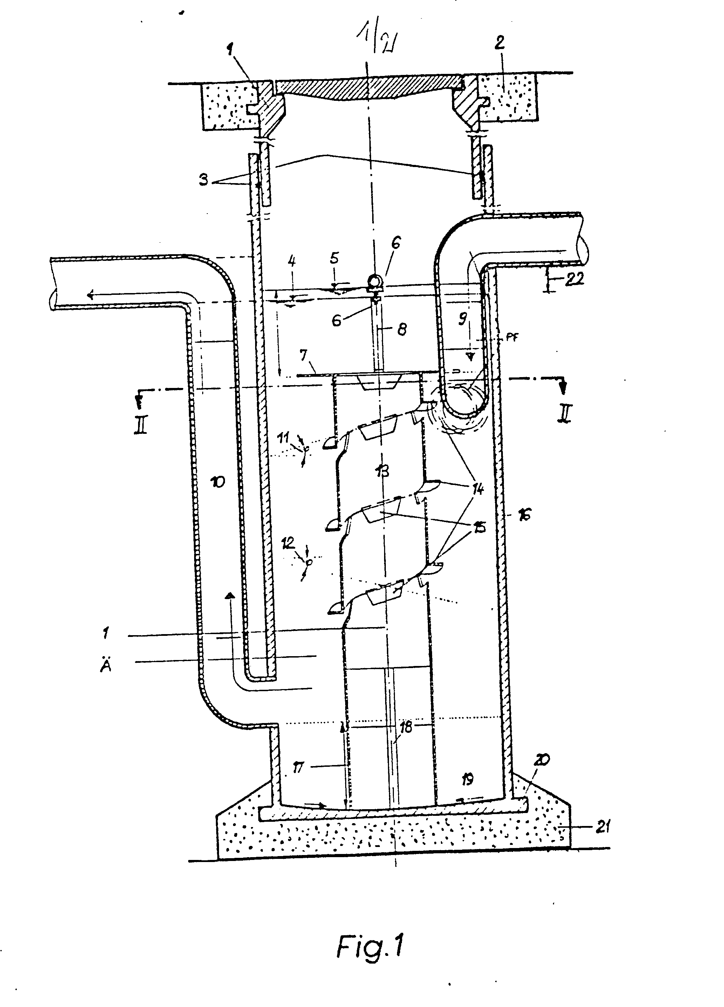

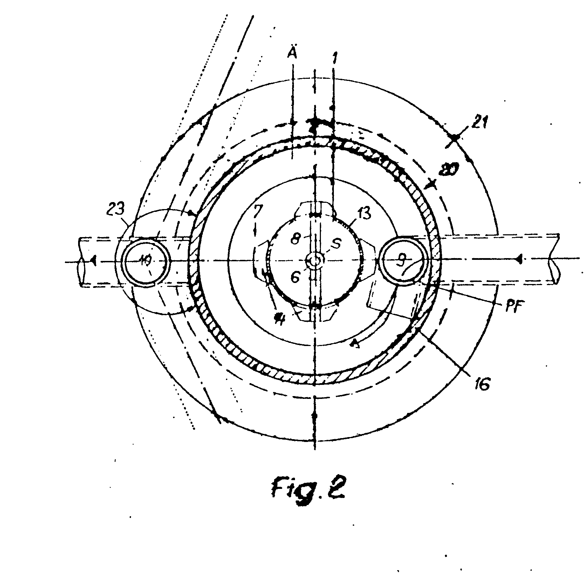

| Recherchenort | Abschlußdatum der Recherche | Prüfer |
|---|---|---|
| Berlin | 30-06-1980 | KÜHN |

EPA form 1503.1 06.78